# EUROPEAN PATENT SPECIFICATION

(11) **EP 1 462 315 B1**
(45) Date of publication and mention of the grant of the patent: **21.02.2007**
(21) Application number: 01275059.2
(22) Date of filing: 27.11.2001
(51) Int. Cl.: B60R 16/02

(54) **SYSTEM AND METHOD FOR PROTECTING AGAINST SHORT CIRCUITS IN ELECTRIC POWER DISTRIBUTION ARCHITECTURES WITH TWO VOLTAGE LEVELS**
SYSTEM UND VERFAHREN ZUM SCHUTZ GEGEN KURZSCHLÜSSE IN ELEKTRISCHEN LEISTUNGSVERTEILUNGSARCHITEKTUREN MIT ZWEI SPANNUNGSPEGELN
SYSTEME ET PROCEDE DE PROTECTION CONTRE LES COURTS-CIRCUITS DANS DES ARCHITECTURES DE DISTRIBUTION D'ENERGIE ELECTRIQUE A DEUX NIVEAUX DE TENSION

(43) Date of publication of application: 29.09.2004
(73) Proprietor: Lear Automotive (EEDS) Spain, S.L., 43800 Valls, Tarragona (ES)
(72) Inventor: BORREGO BEL, Carles, 43800 Valls (TA Valls) (ES); FONTANILLES PINAS, Joan, 43800 Valls (TA Valls) (ES)
(74) Representative: Primo de Rivera y Urquijo, Jose A.
(86) International application number: PCT/ES2001/000462
(87) International publication number: WO 2003/053746

(56) References cited:
- EP-A- 0 539 982
- EP-A- 1 033 804
- WO-A-00/76812
- WO-A-00/77916
- WO-A-01/21445
- US-B1- 6 232 674

## Description

### Field of the Invention

The present invention refers to a protection system against short-circuits in an electric power distribution architecture comprising at least a first battery B1 at a first voltage level, and a second battery B2 at a second, higher voltage level. Both batteries B1 and B2 or voltage sources, are provided with an automatic disconnection device and intended for a differentiated electric power supply to respective network sectors provided with corresponding power distribution units to the loads, each one controlled by a respective microcontroller, said first battery B1 and sector or sectors it supplies being susceptible of being supplied in turn from the second battery B2 at a higher voltage level, through a converter DC/DC, said battery B2 being connected to a voltage generator. Said converter can be a one-way or a two-way converter.

The invention is applicable to electric power distribution networks and/or architectures with parts or sectors at two voltage levels, in particular, used in the automotive field, known as "dual voltage" and hereinafter referred to as DV.

The invention also refers to a method for implementing said system, comprising a series of protection processes against short-circuits carried out by said power distribution units, operating in a controlled manner and generally controlled from a centralised, short-circuit detecting center. Said short-circuit protection procedures essentially comprise a detection process by means of an action on the different network loads, especially on those power loads susceptible of being involved in the short-circuit situation.

Additionally, the invention falls within the electric power distribution architectures implemented on the basis of power sectorisation, according to which principle they are defined in the network, e.g. a series of areas installed in a vehicle, existing in each one of them an intelligent node (power distribution unit or box with a management microcontroller) that locally controls the loads and switches, protection devices and/or sensors associated to the same, which intelligent nodes are adapted to send and receive information through a multiplexed data bus, which allows for a great reduction not only of the number of cables but also in their length, not forgetting the decrease in the number of cables that go from one area to another of the vehicle, the parameter of which has great influence in the ease of assembly of the wiring and in minimising the risk of short-circuits due to the applied physical protections.

### Background of the Invention

DV systems and particularly those implemented in vehicles, typically comprise a first network at 14V used to feed low demand loads, supplied from a battery B1 or from a second network at a higher voltage, typically 42V, through a one-way or two-way electrical converter DC/DC. On its part, said second 42V network is used to feed high demand loads such as the starter, the heating system, the electromagnetic valve control, motors, such as those of the window opening mechanisms, position adjustment, fans, etc., and is fed from a generator G (the vehicle's alternator) or from a second battery B2.

DV systems particularly for vehicles are described in numerous patent and patent application documents, it being possible to mention the following ones: US 5334926, US 6232674, EP 337155, EP 539982, EP 1033804, WO 99/22434 and WO 00/76812.

Due to the coexistence of both power networks at different voltage levels, a new problem related to the safety of the system is added with regards to the usual positive grounding short-circuits. Said problem relates to the possibility that, in the automobile sector example explained, some eventual short-circuits between the +14V and +42V positives occur. The traditional protection approaches applied to date cannot totally ensure safety in DV architectures, wherein consequences can be much more dangerous, with the risk of explosion of battery B1 at a lower voltage level and/or of fire in part of the affected network, susceptible of propagating.

There are essentially two types of protection against short-circuits in DV architectures. The first and more economic one is mechanical, affecting the protection of the wiring, of the network itself, and its design and routing. The mechanical isolation can thus be intensified in the scope of the components (fuses near the batteries, arrangement of the two batteries at spaced points, differentiated and sealed connectors, lids for threaded terminals, etc.) and, with regard to the distribution lines themselves, a suitable dimensioning of the cables and a suitable isolation between themselves and, in the case of the automobile, a separation of the spans at different voltage levels, especially of those areas susceptible of receiving an impact by e.g. a shock, can be proceeded with.

The second class of protection is active (electrical) y it is based in some current measurements at different points of the network that allow for sensing when a fault occurs. The invention falls within this second field and has the advantage of using some electronic modules, mainly associated to the battery at a lower voltage level, having an important role because controls all services to the network at a higher voltage level (in the referred example, the one at 42V) and establishes communication with the rest of the system to receive/send some suitable parameters related to some potential short-circuit situations.

Patent application PCT ES00/00393, from the applicant itself, discloses a modular assembly connectable to a battery, for supervision of its state and protection, including a series of electronic modules comprising a first module BD applied to a disconnection of the power supply from said battery, a second module BM applied to a dynamic measure of the states of charge (SOC) and health (SOH) of the battery, according to the technology disclosed in the Spanish patent application P 200003143, also from the applicant itself, based on determining the electrochemical impedance of the battery, and a third module LCM destined to a control and management of the loads fed by said battery. But said modular assembly is not equipped nor provided for the methodology shown in this invention.

Other documents of interest with regard with the field of the invention are patents US 159257, US 6281631 and WO 98/54811.

### Brief Disclosure of the Invention

During a short-circuit between power supply sources or batteries, current flows from battery B2 at a higher voltage level to battery B1 through the path of the short-circuit. The resistance of the cables involved is usually between 50 mOhm and 300 mOhm, so that the currents may range between 480 A and 80 A (being possible even lower currents, depending on the physical elements involved in parallel). This overcurrent can blow some of the fuses, so that it is possible that the short-circuit then disappears or that it may burn the cables or even that it may cause the explosion of the lower-voltage-level battery B1.

The required steps for identification of a short-circuit avoiding confusion with an overcurrent of another nature, according to the invention, are the following:
1) alarm derived from the state of the converter DC/DC;
2) constant sensing of the voltage at posts of the lower-voltage-level battery B1;
3) changes of current in the lower-voltage-level battery B1.

All the above conditions must be met and the order or sequence thereof is mandatory in order to achieve the minimum and necessary conditions for identifying a short-circuit.

According to the typical structure and functionality, a converter DC/DC stops the conversion process in case voltage at the input and the output thereof are outside a certain, pre-set range. The converter constantly detects (by means of analog wiring during at least 2 ms) for the voltage at the input to be in the range of 30 to 58 V (specification for the voltage of the 42V power source) and that the output is between 9V and 21V (suggested voltage for the specification of the 14V power source). A module SMM in charge of short-circuit monitoring, preferably associated to a battery B1 at the lower voltage level, will be advantageously informed by a direct connection (in order to avoid delays derived from a shared communications network) about said abnormal situation. A specific voltage detector for the power supply source B2 at the higher voltage level is not considered necessary due to the use of said feature of the converter DC/DC.

Once by means of the information given by the converter DC/DC, it is known that an alteration in the voltage values in both power supply sources has occurred, sensing of a redundant voltage, as close as possible to the power supply source B1 at the lower voltage level, during a specified time that clearly identifies a constant overcurrent situation, is proposed. Knowledge of the loads is necessary to determine this time (a time of around 1 ms is suggested). Said module SMM will check this information and complete the short-circuit sensing process.

If the converter DC/DC is disconnected, it is not possible that charging from the power supply source or battery B1 at low voltage level occurs. Therefore, if said module SMM senses a change of current in the load of said power supply source B1, this is a clear indication that a short-circuit has been established (the accuracy in the sensing of this current is not important since it is enough to verify that a certain degree of current charging the source exists).

If all the above conditions have been sensed by the SMM, then it is proceeded to inform the microcontrollers of the different power distribution units of the architecture about it (by means of e.g. sending a priority interruption) so that they perform a short-circuit protection that essentially will comprise disconnecting the power loads and/or an inspection thereof disconnecting those that show anomalies, and eventually disconnecting battery B2 at the higher voltage level, and even battery B1.

The invention will be described below as well as diverse variants of the referred short-circuit protection process, with greater detail, with reference to some drawings illustrative of a way of implementing it, provided by way of example only.

US-A-6 232 674 discloses a control device for a vehicle electric system with at least two batteries located between said control and including a supply network element, a bus capable microcomputer a DC/DC converter and a short circuit proof end stage.

WO-A-01/21445 (preamble of claim 1) refers to a multi-voltage wiring loom with two batteries at different voltages interrelated by a DC/DC converter and an associated module SLV based on a microcontroller and ruled by a program loop to monitor the clock cycle of the current through the battery at a higher level to detect an overcurrent and avoid damages due to a short-circuit by disconnecting said battery from supplying energy.

### Brief Disclosure of the Drawings

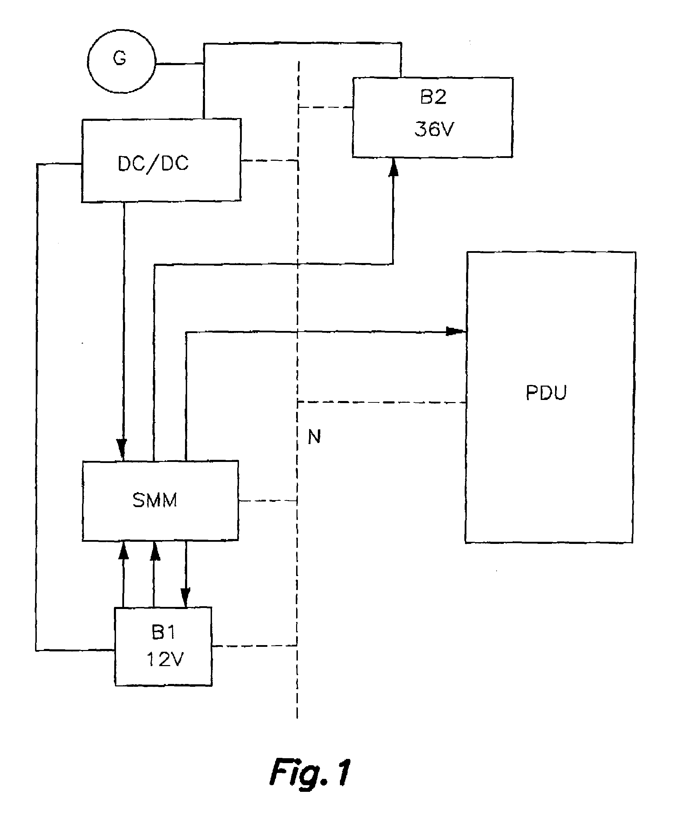

Fig. 1 is a schematic diagram of the operative principles proposed by the invention, showing in addition those basic parts of the system and method, i.e. the converter DC/DC, batteries B1, B2, generator G, short-circuit monitoring module SMM, power distribution units PDU, and communications network N.

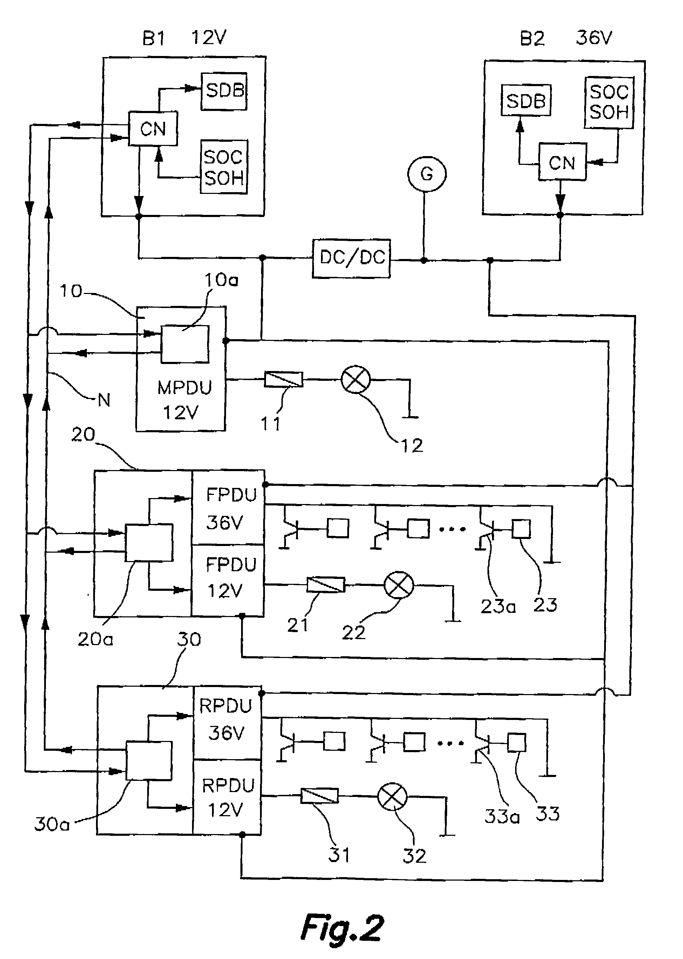

Fig. 2 is a representation, likewise simplified, that shows a power distribution system comprising two batteries B1, B2 and three power distribution units or boxes, situated in different areas, e.g. in the front portion FPDU, in the rear portion RPDU, and in the middle portion MPDU of an automotive vehicle. The first two ones include a first part that governs power loads and a second part intended for loads fed from the network at a lower voltage level, whilst the third one is only provided for loads at the lower voltage level. Each one of the energy distribution boxes comprises a control microcontroller.

### Detailed Description of the Invention

Figure 1 shows an electric power distribution architecture at two voltage levels, comprising at least a first battery B1 at a first 12V voltage level and a second battery B2 at a second, higher 36V voltage level, both provided with an automatic disconnection device and intended for differentiated supply of electric power to respective network sectors provided with units for distributing power to the loads, which units are schematised by a single PDU unit or assembly, controlled by a corresponding microcontroller. As can be seen, said first battery B1 and sector or sectors it supplies can be fed in turn from the second battery B2 through a converter DC/DC, whilst the second battery B2 and network at a higher voltage level are connected to a voltage generator G, such as e.g. an automobile's alternator.

According to the invention, said first, lower-voltage-level battery B1 has a module SMM associated to it, based on a microcontroller applied to monitoring the voltage and current (essentially, the direction of the current) at the posts of this battery B1 and to permanently sensing a state of operation of the converter DC/DC. On the other hand, said monitoring module of battery B1 in turn is connected, through a port of its micro-controller and a communications network N, to each one of the control microcontrollers of the power distribution units to the loads in order to, facing a short-circuit situation sensed by said monitoring module based on some sensed, predetermined values of voltage, current, and state of the converter DC/DC, inform to each one of the microcontrollers of said power distribution units so that they perform a short-circuit protection process.

Input arrows to module SMM indicate information that it permanently monitors for: state of the converter DC/DC, voltage at posts of battery B1, and eventual load current to said battery B1 at a lower voltage level. On the other hand, communications network N, depicted by dashed lines, indicates intercommunication between said module SMM and converter DC/DC, batteries B1, B2, and power distribution units PDU. Output arrows from module SMM indicate information and/or commands that said module sends to the microcontrollers in charge of the PDUs, as well as the eventual disconnection commands to batteries B2 and even B1.

Said short-circuit protection process comprises several action alternatives to be performed on the part of the power distribution units once module SMM has sent an interruption to the microcontroller of the corresponding unit, basically consisting in a disconnection of the charges and/or check/inspection thereof, after execution of which, and if the short-circuit situation persists, said module SMM may order the disconnection of battery B1 and even of battery B2.

The method of the present invention, which is applied by means of the system described in relation to Fig.1, is described in relation with the example illustrated in Fig. 2.

Thus, the first battery B1 at a first 12V voltage level and the second battery B2 at a second 36V voltage level are shown in Fig. 2. In this example, both batteries B1 and B2 are provided with a corresponding automatic disconnection device SDB, a monitoring module of the state of charge SOC and of the state of health SOH, and a control node CN. Each battery B1, B2 is intended for a differentiated supply of electric power to respective network sectors provided with power distribution units 10, 20, 30 to the loads. First battery B1 and sector or sectors it feeds, is susceptible of being fed in turn from second battery B2 through a converter DC/DC, whilst battery B2 is connected to a voltage generator G, such as the vehicle's alternator. Control node CN associated to battery B1 takes on, in Fig. 2, the functions of said module SMM applied to sensing the operative state of said converter DC/DC and to subsequent monitoring in case said state is a stoppage of the conversion process of the voltage and current at the posts of said battery B1.

Each power distribution unit 10, 20, 30 is controlled by a corresponding microcontroller 10a, 20a, 30a. In the illustrated example, distribution unit 10 has just one sector MPDU dedicated to the loads situated in the middle portion of an automotive vehicle, which are at 14V and have been symbolised as a lamp 12 protected by a fuse 11. Instead, distribution units 20 and 30, which are respectively intended for the loads in the front and rear portions of the automobile, have each one a respective sector FPDU, RPDU provided for feeding the loads at 14V, symbolised by lamps 22, 32 protected by respective fuses 21, 31, and a respective sector FPDU, RPDU for feeding the loads 23, 33 at 42V which have associated corresponding power switches 23a, 33a for controlling said loads, such as either FET power switches with current sensing or power relays.

Communications of control node CN of battery B1, representative of short-circuit monitoring module SMM, with node CN of second battery B2 and with the different microcontrollers 10a, 20a, 30a of the power distribution units 10, 20, 30 are preferably carried out through a dedicated network N, although a shared bus, such as a CAN bus, may be likewise used.

The method according to the invention basically comprises performing a permanent monitoring of the state of converter DC/DC that interrelates said two batteries B1 and B2, as well as at least the voltage and/or current at the posts of said battery B1. In case of sensing a stoppage of the conversion process of the converter DC/DC, and after this, it occurs that said voltage value exceeds a certain threshold, and that said current is an input current to battery B1, node CN informs immediately through said dedicated communications network N or CAN bus to each one of the microcontrollers 10a, 20a, 30a of said power distribution units 10, 20, 30 so that they perform a short-circuit protection process.

Thus, the method's initial step comprises proceeding, in an ordered and sequential manner, in the sensing of the condition of the converter DC/DC, acquiring the voltage at the posts of the 12V battery B1 and, finally, sensing a possible load current of said battery B1 and, only if the predetermined values of said two voltage and current measurements (in this last case, basically sensing an input or load current of battery B1) fall within some pre-set ranges, proceeding to inform the power distribution units of an eventual short-circuit situation by sending an interruption to the corresponding microcontrollers 10a, 20a, 30a so as to initiate a short-circuit protection algorithm or process.

According to a first variant, a short-circuit protection process to be carried out by the power distribution units, essentially those 20, 30 which have associated power loads 23, 33, when their microcontrollers 20a, 30a receive said interruption, comprises a total disconnection of all said power loads 23, 33 and, in case a short-circuit situation continues being sensed (by assessment of three previously mentioned conditions) from said monitoring module or node CN of battery B1, sending a signal through said communications network N for disconnection of at least the battery B2 of higher voltage level (36V) is proceeded with, accessing the disconnection device SDB of said battery B2 or the microcontroller of the control node CN associated with said battery B2.

In the event that said complete disconnection of the loads leads to a non-short-circuit situation, as evaluated by said monitoring module, then a one-at-a-time reconnection of power loads 23, 33 of each power distribution unit 20, 30 is proceeded with until sensing of the load or loads susceptible of generating said short-circuit situation, as evaluated by said monitoring module, the load of which is disabled until its repair or substitution.

However, as an option, prior to performing reconnection of each one of said power loads, it is possible to perform a prior step consisting of a voltage or impedance measurement at the output of each power switch 23a, 33a applied to controlling the respective load, and in case the measured values exceed a certain threshold, said charge is left inactive.

The short-circuit protection process of the present invention comprises, according to another variant, progressively disconnecting all power loads 23, 33 associated to each one of the power distribution units 20, 30, and checking from said monitoring module or node CN of battery B1 if a certain disconnection makes the short-circuit situation stop. If that is the case, disconnection of the involved load is proceeded with. If at completion of the disconnection of all the power loads 23, 33 of each power distribution unit 20, 30 a short-circuit situation continues being sensed from said node CN of the monitoring module, a signal for disconnecting at least higher-voltage-level battery B2 is sent through said communications network N, accessing in order to doing so disconnection device SBD of said battery B2 or the microcontroller of a control node CN associated with said battery B2.

Still another different possibility for the short-circuit protection process of the present invention comprises supervising current demand of some controlling devices, such as a power switch 23a, 33a, associated to each one of the power charges 23, 33 dependent on each one of the power distribution units 20, 30, and disconnecting those loads in which said demand exceeds a certain threshold and, then, in case a short-circuit situation continues being sensed from said monitoring module, after completion of the supervision of all the power loads of each power distribution unit, a signal for disconnecting at least higher-voltage-level battery B2 is sent through said communications network N, accessing in order to doing so the disconnection device SDB of said battery B2 or the microcontroller of a control node CN associated with said battery B2.

Given that power distribution units 10, 20, 30 comprise some devices such as some switches 23a, 33a with current sensing, associated with each one of the power loads 23, 33, the power switches 23a, 33a of which are controlled from the corresponding microcontroller 20a, 30a of the corresponding unit 20, 30, the invention proposes in an initial phase and prior to proceeding with the disconnection of the power loads, a prior phase of sensing of the output state of each one of said switches 23a, 33a, particularly their voltage or impedance, so that if the sensed value in a certain power switch 23a, 33a exceeds a certain threshold, connection of the load associated therewith is not proceeded with anymore. E.g. in case a short-circuit between the 42V load and a 14V circuit exists, the output voltage of the corresponding FET associated to said load will be 14V instead of OV (ground). Thereby, prior to connecting this load, the system may be informed of a potential short-circuit that could damage the power distribution system. This sensing only verifies circuits fed at 14V. This solution is easily implemented and the accuracy of said measurement might be of 10% because the mere sensing of the existence of a voltage is a clear indication of a possible fault in the circuit. In the event that the circuit associated to the 14V load is disconnected, sensing of a voltage level would not avoid the short-circuit. Therefore, characterisation of the impedance of the loads is proposed, so that prior to connection of the load, an out-of-range impedance could be sensed, indicative of a short-circuit risk.

As indicated, whichever the action variant chosen, if after the execution of said short-circuit protection process by each one of said power distribution units 20, 30 in relation with the power loads 23, 33 involved, node CN of the monitoring module associated with battery B1 continues sensing a short-circuit situation, disconnection of battery B2 or even battery B1 from their corresponding sectors of the network they feed is proceeded with.

As for the latency (time period from sensing until solving a short-circuit event) of the proposed action, the different steps of the method have to be considered:
1) sensing: information about a state of stoppage of the converter DC/DC, together with the acquisition of the voltage and current values at the posts of battery B1, can take less than 2 ms, and generating, from the microcontroller of the node CN of said battery B1, an interruption to the microcontrollers 10a, 20a, 30a of the power distribution units can last approximately 500 µs. Therefore, time of sensing may be close to 2.5 ms;
2) execution of an algorithm of sensing of the load involved or causing the short-circuit situation, by each one of the power distribution units or boxes 10a, 20a, 30a, basically depends on the programming of the interruption in the respective microcontroller 10a, 20a, 30a and on the circuits of the FET devices 23a, 33a with current sensing, being able to estimate it between 250 µs and 500 µs; and
3) disconnection of the FET devices 23a, 33a, around 500 µs (depending on the FET power transistor used).
Thus, the time of latency will be in the range of 4 ms, at worst below 10 ms, which is a time that allows to avoid burning of the cables or fuses.

## Claims

1. A system for protection against short-circuits in electric power distribution architectures at two voltage levels, comprising at least a first battery (B1) at a first voltage level and a second battery (B2) at a second, higher voltage level, both provided with an automatic disconnection device (SDB) and intended for a differentiated electric power supply to respective network sectors provided with power distribution units (10), (20), (30) to loads (12), (22), (23), (32), (33), each one of the units (10), (20), (30) being controlled by a corresponding microcontroller (10a), (20a), (30a), said at least first battery (B1) and sector or sectors that it supplies being susceptible of being fed in turn from the second battery (B2) through a DC/DC converter, said second battery (B2) being connected to a voltage generator, **characterised in that** it is applied to the detection of short-circuits between said first and second voltage levels, said system having a module (SMM) based on a microcontroller and connected to the first battery (B1) and directly connected to the DC/DC converter for monitoring at least the voltage at the posts of said first battery (B1), the current and the current direction in the first battery (B1) and for sensing an operative state, including a stoppage of the conversion process, of said DC/DC converter, being said module (SMM) also connected, through a communications network (N), with each one of the control microcontrollers (10a), (20a), (30a), of the power distribution units (10), (20), (30) to the loads (12), (22), (23), (32), (33), in order to, facing a short-circuit situation sensed by said monitoring module (SMM), according to the detection of a predetermined state of the DC/DCconverter, followed by a predetermined voltage value detected at the first battery (B1) and next by a predetermined current value and direction detected in the first battery (B1), inform each one of the microcontrollers (10a), (20a), (30a) of the power distribution units (10), (20), (30) in order to carry out a short-circuit protection process.

2. A system according to Claim 1, **characterised in that** said communications network N is a dedicated network that links the microcontrollers (10a, 20a, 30a) of said power distribution units (10, 20, 30) or peripheral units thereof.

3. A system according to Claim 1, **characterised in that** said communications network N is a shared bus, such as a CAN bus, that links the microcontrollers (10a, 20a, 30a) of said power distribution units (10, 20, 30) or peripheral units thereof.

4. A system according to Claim 1, **characterised in that** said monitoring module SMM based on a microcontroller or control node CN is included in an assembly applied to the dynamical measurement of the state of health (SOH) and state of charge (SOC) of said battery B1.

5. A system according to Claim 1, **characterised in that** said monitoring module SMM based on a microcontroller or control node CN is included in an assembly applied to the control and management of all or part of the loads fed by said battery B1.

6. A system according to Claim 1, **characterised in that** said power distribution units (10), (20), (30) to the loads (12), (22), (23), (32), (33) controlled by a microcontroller (10a), (20a), (30a), comprise a portion that supplies loads (22), (32) of said sector, at a lower voltage level, fed from battery B1, and a portion dedicated to said power loads (23), (33) included in said higher-voltage-level sector fed by said battery B2.

7. A system according to Claim 6, **characterised in that** said power loads (23), (33) are governed from devices such as power switches (23a, 33a) with current sensing, the power switches (23a), (33a) of which are controlled from the corresponding microcontroller (20a, 30a) of the unit.

8. A system according to Claim 7, **characterised in that** said power switches (23a), (33a) are FET devices with current sensing.

9. A system according to Claim 1, **characterised in that** each one of said batteries B1 and B2 is provided with an electronic control module based on a microcontroller for controlling at least a disconnection device (SDB) of said batteries.

10. A system according to Claim 7, **characterised in that** said power distribution units (10), (20), (30) comprise a connection of each one of said power switches (23a), (33a) to said microcontroller (20a), (30a) of the corresponding unit (20, 30) for a prior sensing of the voltage or impedance at the output of said power switches (23a), (33a) prior to connecting the controlled load (23), (33), allowing avoidance of said connection if said values are outside of some predetermined margins.

11. A method for protection against short-circuits in electric power distribution architectures at two voltage levels, comprising at least a first battery (B1) at a first voltage level and a second battery (B2) at a second, higher voltage level, both provided with an automatic disconnection device (SDB) and destined to a differentiated supply of electric power to respective network sectors provided with power distribution units (10), (20), (30) to loads (12), (22), (23), (32), (33), each one of the units (10), (20), (30) being controlled by a corresponding microcontroller (10a), (20a), (30a), said at least first battery (B1) and sector or sectors that it supplies being susceptible of being fed in turn from the second battery (B2) through a DC/DCconverter, said second battery (B2) being connected to a voltage generator, **characterised in that** it is applied to the detection of short-circuits between said first and second voltage levels, and by performing permanent monitoring of the voltage at the posts of said first battery (B1), of the current and direction of the current in the first battery (B1), as well as of an operative state of the DC/DC converter, including a stoppage of the conversion process of said DC/DC converter which interrelates said two batteries (B1, B2), and **in that**, in case it is sensed that said state of the DC/DC converter is an off state, and after that state detection the value of said monitored voltage exceeds a certain threshold, and next said monitored current has a direction entering the first battery (B1) and a value which exceeds a certain threshold, each one of the microcontrollers (10a), (20a), (30a) of said power distribution units (10), (20), (30) is informed through a communications network (N) so as to perform a short-circuit protection process.

12. A method according to Claim 11, **characterised in that** during the short-circuit sensing step, sensing of a stoppage state of the conversion process of the converter DC/DC, acquisition of voltage at the posts of battery B1, at a lower voltage level, and finally sensing of a possible load current of said battery B1 are performed in an ordered and sequential manner, so as to, if the predetermined values fall within pre-set ranges, proceed inform to power distribution units (10, 20, 30) about an eventual short-circuit situation, by sending a priority interruption through said network N to the microcontrollers (10a, 20a, 30a) thereof.

13. A method according to Claim 11, **characterised in that** said short-circuit protection process comprises a complete disconnection of all the power loads (23, 33) associated to each one of the power distribution units (20), (30), and **in that**, in case a short-circuit situation continues being sensed from said monitoring module, a signal is sent through said communications network N for disconnection of at least the higher-voltage-level battery B2, accessing in order to do so the disconnection device SDB of said battery B2 or a control node CN associated to said battery B2.

14. A method according to Claim 11, **characterised in that** in case said complete disconnection of loads (23, 33) leads to a non-short-circuit situation, as evaluated by said monitoring module, a reconnection of the power loads (23), (33) of each power distribution unit (20, 30) is performed until sensing the load or loads susceptible of generating said short-circuit situation, as evaluated by said monitoring module.

15. A method according to Claim 14, **characterised in that** prior to performing the reconnection of each one of said power loads (23), (33), a measurement of the voltage or impedance at the output of a power switch (23a), (33a), applied to controlling a corresponding load (23), (33), is performed, and **in that** in case the measured values exceed a certain threshold, the involved load is left inactive.

16. A method according to Claim 11, **characterised in that** said short-circuit protection process comprises progressively disconnecting all the power loads (23), (33) associated to each one of the power distribution units (20), (30), and checking, from said monitoring module, if a certain disconnection makes the short-circuit situation stop, in which case a permanent disconnection of the load involved is carried out, and **in that** in case a short-circuit situation continues being sensed from said monitoring module, after disconnection of all the power loads (23), (33) of each power distribution unit (20), (30), a signal for disconnection of at least higher-voltage-level battery B2 is sent through said communications network N, accessing in order to do so disconnection device SDB of said battery B2 or a control node CN thereof associated to said battery B2.

17. A method according to Claim 11, **characterised in that** said short-circuit protection process comprises supervising of current demand in controlling devices, such as a power switch (23a), (33a), associated to each one of the power loads (23), (33) depending from each one of the power distribution units (20), (30), and disconnecting those loads wherein said demand exceeds a certain threshold, and **in that**, in case a short-circuit situation continues being sensed from said monitoring module, after the supervision of all the power loads (23), (33) of each power distribution unit (20), (30), a signal for disconnecting at least the higher-voltage-level battery B2 is sent through said communications network N, accessing in order to do so the disconnection device SDB of said battery B2 or a control node CN thereof associated to said battery B2.

18. A method according to Claim 11, **characterised in that** said power distribution units (20), (30) comprise devices such as power switches (23a), (33a), with current sensing, associated to each one of the power loads (23), (33), which power switches (23a), (33a) are controlled from the corresponding microcontroller (20a), (30a) of the unit, and by comprising a step of sensing the output state of each one of said switches (23a), (33a), particularly their voltage or impedance, so that if the value sensed in a certain power switch (23a), (33a) exceeds a certain threshold, connection of the load (23), (33) associated therewith is not carried out.

19. A method according to Claim 11, **characterised in that** in case that at completion of said short-circuit protection process by each one of said power distribution units (10, 20, 30) a short-circuit situation continues being sensed by the monitoring module, disconnection of the two batteries B1 and B2 from their corresponding network sectors is carried out.

## Patentansprüche

1. System zum Schutz vor Kurzschlüssen in Stromversorgungsarchitekturen mit zwei verschiedenen Spannungsstufe, das mindestens eine erste Batterie (B1) mit einer ersten Spannungsstufe und eine zweite Batterie (B2) mit einer zweiten, höherem Spannungsstufe umfasst ,wobei beide mit einer automatischen Ausschaltvorrichtung (SDB) ausgestattet sind und für eine differenzierte Stromversorgung der jeweiligen mit für die Ladungen (12), (22), (23), (32), (33)Stromverteilungseinheiten (10), (20), (30) versehenden Stromnetzabschnitte vorgesehen sind, wobei jede einzelne der Einheiten (10), (20), (30) von einem entsprechenden Mikrokontroller (10a), (20a), (30a) kontrolliert wird, wobei mindestens die erste Batterie (B1) und der Abschnitt oder die Abschnitte die sie versorgt, fähig sind, sich von der zweiten Batterie (B2) mittels eines Gleichspannungswandler zu speisen, wobei die genannte zweite Batterie (B2) mit einem Spannungsgenerator verbunden ist, **dadurch gekennzeichnet, dass** es für die Erkennung von Kurzschlüssen zwischen dem ersten und zweiten Spannungsstufe angewandt wird, wobei das genannte System ein auf einem Mikrokontroller basierendes und mit der ersten Batterie verbundenes (B1) Modul (SMM) aufweist, das direkt mit dem Gleichspannungswandler verbunden ist, um mindestens die Klemmenspannung der ersten Batterie (B1), den Strom und die Stromrichtung dieser ersten Batterie (B1) zu überwachen, und um einen Betriebszustand zu erkennen, einschließlich einer Unterbrechung des Umwandlungsprozesses des Gleichspannungswandler, wobei das Modul (SMM) auch durch ein Kommunikationsnetz (N) mit jedem einzelnen der Mikrokontroller (10a), (20a), (30a) zur Kontrolle der Stromverteilungseinheiten (10), (20), (30) für die Ladungen (12), (22), (23), (32), (33) verbunden sind, um bei einem durch das genannte Überwachungsmodul (SMM) erkannten Kurzschluss, gemäß der Erkennung eines vorgegebenen Zustandes des Gleichspannungswandlers, gefolgt von einem vorgegebenen in der ersten Batterie (B1) detektierten Spannungswert und anschließend von einem in der ersten Batterie (B1) erkannten, vorgegebenen Stromwert und Richtung, jeden einzelnen der Mikrokontroller (10a), (20a), (30a) der Stromverteilungseinheiten (10), (20), (30) zu informieren, um einen Prozess zum Schutz gegen Kurzschlüsse durchzuführen.

2. System nach Anspruch 1, **dadurch gekennzeichnet, dass** das Kommunikationsnetz N ein dediziertes Netzwerk ist, dass die Mikrokontroller (10a, 20a, 30a) der Stromverteilungseinheiten (10, 20, 30) oder ihrer peripheren Einheiten verknüpft.

3. System nach Anspruch 1, **dadurch gekennzeichnet dass** das Kommunikationsnetz N ein gemeinsam genutzter Bus ist, wie zum Beispiel ein CAN-Bus ("Controller Area Network"), welcher die Mikrokontroller (10a, 20a, 30a) der genannten Stromverteilungseinheiten (10, 20, 30) oder ihrer peripheren Einheiten verknüpft.

4. System nach Anspruch 1, **dadurch gekennzeichnet dass** das auf einem Mikrokontroller oder Kontrollknoten CN ("control node") basiertes Überwachungsmodul SMM in einer Montageanordnung zur dynamischen Messung des Gesundheitszustandes (SOH, "state of health") und des Ladezustand (SOC, "state of charge") der Batterie B1 integriert ist.

5. System nach Anspruch 1, **dadurch gekennzeichnet dass** das auf einem Mikrokontroller oder Kontrollknoten CN basiertes Überwachungsmodul SMM in einer Montageanordnung zur Kontrolle und Verwaltung aller oder eines Teiles der durch die Batterie B1 gespeisten Ladungen integriert ist.

6. System nach Anspruch 1, **dadurch gekennzeichnet, dass** die Stromverteilungseinheiten (10), (20), (30) für die von einem Mikrokontroller (10a), (20a), (30a) kontrollierten Ladungen (12), (22), (23), (32), (33) einen Bereich umfassen, der die Ladungen (22), (32) dieses Abschnittes mit einem niedrigerem Spannungsstufe versorgt, der von der Batterie B1 gespeist wird, und einen speziellen Bereich für die genannten Stromladungen (23), (33) der in dem Abschnitt mit höherem Spannungsstufe, gespiesen durch die Batterie B2, integriert ist.

7. System nach Anspruch 6, **dadurch gekennzeichnet, dass** die Stromladungen (23), (33) durch Vorrichtungen wie Netzschalter (23a, 33a) mit Stromsensorik gesteuert werden, Netzschalter (23a, 33a) die durch den entsprechenden Mikrokontroller (20a, 30a) der Einheit kontrolliert werden.

8. System nach Anspruch 7, **dadurch gekennzeichnet, dass** die Netzschalter (23a), (33a) FET-Geräte ("Field-Effect Transistor", Feldeffekttransistor) mit Stromsensorik sind.

9. System nach Anspruch 1, **dadurch gekennzeichnet, dass** beide der genannten Batterien B1 und B2 mit einem auf einem Mikrokontroller basierten elektronischen Überwachungsmodul ausgestattet sind, um mindestens eine Ausschaltvorrichtung (SDB) der Batterien zu kontrollieren.

10. System nach Anspruch 7, **dadurch gekennzeichnet, dass** die Stromverteilungseinheiten (10), (20), (30) eine Verbindung jedes der Netzschalter (23a), (33a) mit dem Mikrokontroller (20a), (30a) der entsprechenden Einheit (20, 30) umfassen, um eine Spannungs- oder Impedanzvorerkennung am Ausgang der Netzschalter (23a), (33a) vor die Verbindung der kontrollierten Lastung (23), (33) zu ermöglichen, und für den Fall, dass die Werte außerhalb dem, festgelegten Bereich liegen, diese Verbindung zu vermeiden erlauben.

11. Eine Schutzmethode gegen Kurzschlüsse in Stromverteilungsarchitekturen mit zwei verschiedenen Spannungsstufen, die mindestens eine erste Batterie (B1) mit einer ersten Spannungsstufe und eine zweite Batterie (B2) mit einer zweiten, höherem Spannungsstufe umfasst, wobei beide mit einer automatischen Ausschaltvorrichtung (SDB) ausgestattet sind, und für eine differenzierte Stromversorgung der jeweiligen mit Stromverteilungseinheiten (10), (20), (30) für Stromladungen (12), (22), (23), (32), (33) versehenen Stromnetzabschnitte, vorgesehen sind, wobei jede der Einheiten (10), (20), (30) von einem entsprechenden Mikrokontroller (10a), (20a), (30a) kontrolliert wird, wobei mindestens die erste Batterie (B1) und der Abschnitt oder die Abschnitte die versorgt werden fähig sind, sich ihrerseits von der zweiten Batterie (B2) mittels eines Gleichspannungswandler zu speisen, wobei die genannte zweite Batterie (B2) mit einem Spannungsgenerator verbunden ist, **dadurch gekennzeichnet, dass** sie zur Erkennung von Kurzschlüssen zwischen der ersten und zweiten Spannungsstufe angewendet wird, und dass sie eine stetige Überwachung der Klemmenspannung der ersten Batterie (B1), der Strom und die Stromrichtung der ersten Batterie (B1), sowie eine Überwachung des Betriebszustands des Gleichspannungswandler, einschließlich einer Unterbrechung des Umwandlungsprozesses des genannten Gleichspannungswandler, der die genannten Batterien (B1, B2) verknüpft, durchführt, und dass im Falle eines erkannten ausgeschalteten-Zustand des Gleichspannungswandler und nach dieser Zustandserkunng, der Wert der überwachten Spannung eine bestimmte Schwelle überschreitet, und danach diese überwachte Spannung eine Eintrittsrichtung in die erste Batterie (B1) und einen Wert aufweist, der eine bestimmte Schwelle überschreitet, wird jeden Mikrokontroller (10a), (20a), (30a) der Stromverteilungseinheiten (10), (20), (30) über ein Kommunikationsnetz N so informiert, dass ein Prozess zum Schutz vor Kurzschlüssen durchgeführt wird.

12. Methode nach Anspruch 11, **dadurch gekennzeichnet, dass** während dem Kurzschlusserkennungsschritt die Erkennung, auf geordnete und sequentielle Art und Weise, einer Ausschaltung des Umwandlungsprozesses des Gleichspannungswandler, die Erfassung der Klemmenspannung der Batterie B1, auf einer tieferen Spannungsstufe, und schließlich die Erkennung eines möglichen Laststroms dieser Batterie B1 so durchgeführt wird, dass falls die vorgegebenen Werte in die vorgegebenen Bereichen liegen, die Stromverteilungseinheiten (10, 20, 30) über eine mögliche Kurzschlusssituation informiert werden, wobei eine prioritäre Ausschaltung durch das genannte Netz N an seinen Mikrokontroller (10a, 20a, 30a) gesendet wird.

13. Methode nach Anspruch 11, **dadurch gekennzeichnet, dass** der genannte Prozess zum Schutz vor Kurzschlüssen einen kompletten Ausschaltung aller Stromladungen (23, 33), die zu jeder der Stromverteilungseinheiten (20), (30) zugeordnet sind, und dass im Falle, dass weiterhin eine Kurzschlusssituation vom Überwachungsmodul nachgewiesen wird, ein Signal durch das Kommunikationsnetz N für den Ausschaltung mindestens der Batterie B2 mit höherem Spannungsstufe gesendet wird, wobei dafür auf die Ausschaltvorrichtung SDB dieser Batterie B2 oder auf einen dieser Batterie B2 zugeordneten Kontrollknoten CN zugegriffen wird.

14. Methode nach Anspruch 11, **dadurch gekennzeichnet, dass** falls diese komplette Ausschaltung der Stromladungen (23, 33) zu einer Situation ohne Kurzschlüsse führt, wie durch das genannte Überwachungsmodul ausgewertet, einen Wiederanschluss der Stromladungen (23), (33) jeder Stromversorgungseinheit (20,30) durchgeführt wird, bis die notwendige Stromladung oder Stromladungen um die genannte Kurzschlusssituation herbeizuführen, wie durch das genannte Überwachungsmodul ausgewertet, nachgewiesen werden.

15. Methode nach Anspruch 14, **dadurch gekennzeichnet, dass** vor dem Wiederanschluss jeder der genannten Stromladungen (23), (33) eine Messung der Spannung oder Impedanz am Ausgang eines Netzschalters (23a), (33a) für die Kontrolle einer Ladung (23), (33) durchgeführt wird, und dass falls der Mittelwert eine gewisse Schwelle überschreiten sollte, die beteiligte Ladung inaktiv belassen wird.

16. Methode nach Anspruch 11, **dadurch gekennzeichnet, dass** der genannte Prozess zum Schutz vor Kurzschlüssen die progressive Ausschaltung aller Stromladungen (23), (33) die zu jeder der einzelnen Stromverteilungseinheiten (20), (30) zugeordnet sind, und die Überprüfung vom genannten Überwachungsmodul umfasst, ob eine bestimmte Ausschaltung die Kurzschlusssituation beendet, wobei in diesem Falle eine permanente Ausschaltung der beteiligten Ladung durchgeführt wird, und dass für den Fall, das die Kurzschlusssituation weiterhin vom Überwachungsmodul nach der Ausschaltung aller Stromladungen (23), (33) jeder Stromversorgungseinheit (20), (30) nachgewiesen wird, ein Signal zur Ausschaltung mindestens der Batterie B2 mit dem höheren Spannungsstufe durch das Kommunikationsnetz N gesendet wird, wobei dafür auf die Ausschaltvorrichtung SDB der Batterie B2 oder auf ihren der genannten Batterie B2 zugeordneten Kontrollknoten CN zugegriffen wird.

17. Methode nach Anspruch 11, **dadurch gekennzeichnet dass** der genannte Prozess zum Schutz vor Kurzschlüssen eine Supervision des Strombedarfes in Kontrollvorrichtungen, wie Netzschalter (23a), (33a), die den einzelnen Stromladungen (23), (33) zugeteilt sind, die von jeder einzelnen der Stromverteilungseinheiten (20), (30) abhängen, und die Ausschaltung solche Ladungen, bei denen der Bedarf eine gewisse Schwelle überschreitet, umfasst und dass sie für den Fall, das weiterhin eine Kurzschlusssituation von genanntem Überwachungsmodul nachgewiesen wird, nach der Supervision aller Stromladungen (23), (33) jeder Stromverteilungseinheit (20), (30), ein Signal für die Ausschaltung mindestens der Batterie B2 des tieferen Spannungsstufe durch das genannte Kommunikationsnetz N gesendet wird, wobei dafür auf die Ausschaltvorrichtung SDB der Batterie B2 oder auf ihren der genannten Batterie B2 zugeordneten Kontrollknoten CN zugegriffen wird.

18. Methode nach Anspruch 11, **dadurch gekennzeichnet, dass** die genannten Stromverteilungseinheiten (20), (30) Vorrichtungen wie Netzschalter (23a), (33a) mit Stromerkennung, die zu jeder der einzelnen Stromladungen (23), (33) zugeordnet sind, umfassen, Netzschalter (23a), (33a), die vom Mikrokontroller (20a), (30a) der entsprechenden Einheit aus kontrolliert werden, und dass sie einen Erkennungsschritt des Zustandes am Ausgang jedes einzelnen Netzschalter (23a), (33a), zwar der Spannungen oder Impedanzen umfasst, so dass falls der erkannte Wert in einem vorgegebenen Netzschalter (23a), (33a) eine bestimmte Schwelle überschreitet, keine Verbindung mit der zugeordnete Ladung (23), (33) durchgeführt wird.

19. Methode nach Anspruch 11, **dadurch gekennzeichnet, dass** falls am Ende des genannten Prozesses zum Schutz vor Kurzschlüssen durch jede der genannten Stromverteilungseinheiten (10, 20, 30), weiterhin eine Kurzschlusssituation vom Überwachungsmodul nachgewiesen wird, die Ausschaltung beider Batterien B1 und B2 von ihren entsprechenden Stromnetzabschnitten durchgeführt wird.

## Revendications

1. Système de protection contre courts-circuits dans des architectures de distribution de puissance électrique à deux niveaux de tension, qui comprend au moins une première batterie (B1) à un premier niveau de tension et une deuxième batterie (B2) à un deuxième niveau de tension supérieure, les deux pourvues d'un dispositif (SDB) de déconnexion automatique et prévues pour une fourniture de puissance électrique différentielle aux secteurs respectifs de réseau pourvus d'unités (10), (20), (30) de distribution de puissance pour des charges (12), (22), (23), (32), (33), chacune des unités (10), (20), (30) étant contrôlée par un microcontrôleur (10a), (20a), (30a) correspondant, ladite au moins première batterie (B1) et le secteur ou les secteurs auxquels elle fournit étant susceptibles d'être alimentés à leur tour depuis la deuxième batterie (B2) au moyen d'un convertisseur CC/CC, ladite deuxième batterie (B2) étant connectée à un générateur de tension, **caractérisé en ce qu'**il est appliqué à la détection de courts-circuits entre lesdits premier et deuxième niveaux de tension, ledit système présentant un module (SMM) basé sur un microcontrôleur et connecté à la première batterie (B1) et directement connecté au convertisseur CC/CC pour surveiller au moins la tension sur les bornes de ladite première batterie (B1), le courant et le sens du courant dans ladite première batterie (B1), et pour détecter un état opérationnel, incluant une interruption du procédé de conversion dudit convertisseur CC/CC, ledit module (SMM) étant également connecté à travers un réseau (N) de communications à chacun des microcontrôleurs (10a), (20a), (30a) de contrôle des unités (10), (20), (30) de distribution de puissance pour des charges (12), (22), (23), (32), (33), pour, face à une situation de court-circuit détectée par ledit module (SMM) de surveillance, selon la détection d'un état prédéterminé du convertisseur CC/CC, suivi d'une valeur de tension prédéterminée détectée dans la première batterie (B1) et après par une valeur et un sens de courant prédéterminés détectés dans la première batterie (B1), informer chacun des microcontrôleurs (10a), (20a), (30a) des unités (10), (20), (30) de distribution de puissance afin de mettre en oeuvre un procédé de protection contre des courts-circuits.

2. Système selon la revendication 1, **caractérisé en ce que** ledit réseau N de communication est un réseau dédié que relie les microcontrôleurs (10a, 20a, 30a) desdites unités (10, 20, 30) de distribution de puissance ou unités périphériques de ceux-ci.

3. Système selon la revendication 1, **caractérisé en ce que** ledit réseau N de communications es un bus partagé, tel qu'un bus CAN ("Controller Area Network", réseau du domaine du contrôleur), qui relie les microcontrôleurs (10a, 20a, 30a) desdites unités (10, 20, 30) de distribution de puissance ou unités périphériques de ceux-ci.

4. Système selon la revendication 1, **caractérisé en ce que** ledit module SMM de surveillance basé sur un microcontrôleur ou un noeud CN ("control node") de contrôle est inclus dans un montage appliqué au mesurage dynamique de l'état de santé (SOH, "state of health") et de l'état de charge (SOC, "state of charge") de ladite batterie B1.

5. Système selon la revendication 1, **caractérisé en ce que** ledit module SMM de surveillance basé sur un microcontrôleur ou un noeud CN est inclus dans un montage appliqué au contrôle et à la gestion de toutes ou une partie des charges alimentées par ladite batterie B1.

6. Système selon la revendication 1, **caractérisé en ce que** lesdites unités (10), (20), (30) de distribution de puissance pour des charges (12), (22), (23), (32), (33) contrôlées par un microcontrôleur (10a), (20a), (30a), comprennent une partie qui fournit les charges (22), (32) dudit secteur, à un niveau de tension inférieur, alimenté à parti de la batterie B1, et une partie dédiée auxdites charges (23), (33) de puissance incluses dans ledit secteur de niveau de tension supérieure alimentée par ladite batterie B2.

7. Système selon la revendication 6, **caractérisé en ce que** lesdites charges (23), (33) de puissances sont régulées à partir de dispositifs tels que des interrupteurs (23a, 33a) de puissance avec détection de courant, interrupteurs (23a, 33a) de puissance qui sont contrôlés par le microcontrôleur correspondant (20a, 30a) de l'unité.

8. Système selon la revendication 7, **caractérisé en ce que** lesdits interrupteurs (23a), (33a) de puissance sont des dispositifs FET ("Field-Effect Transistor", transistor à effet de champ) avec détection de courant.

9. Système selon la revendication 1, **caractérisé en ce que** chacune desdites batteries B1 et B2 est pourvue d'un module de contrôle électronique basé sur un microcontrôleur pour contrôler au moins un dispositif (SDB) de déconnexion desdites batteries.

10. Système selon la revendication 7, **caractérisé en ce que** lesdites unités (10), (20), (30) de distribution de puissance comprennent une connexion de chacun desdits interrupteurs (23a), (33a) de puissance audit microcontrôleur (20a), (30a) de l'unité (20, 30) correspondante, pour une détection préalable de la tension ou impédance à la sortie desdits interrupteurs (23a),(33a) de puissance avant la connexion de la charge (23),(33) contrôlée, en permettant d'éviter ladite connexion si lesdites valeurs sont hors des marges prédéterminées.

11. Méthode de protection contre des courts-circuits dans des architectures de distribution de puissance électrique à deux niveaux de tension, qui comprend au moins une première batterie (B1) à un premier niveau de tension et une deuxième batterie (B2) à un deuxième niveau de tension supérieure, les deux étant pourvues d'un dispositif (SDB) de déconnexion automatique et destinées à une fourniture de puissance électrique différentielle à des secteurs respectifs de réseau pourvus d'unités (10), (20), (30) de distribution de puissance pour des charges (12), (22), (23), (32), (33), chacune des unités (10), (20), (30) étant contrôlée par microcontrôleur (10a), (20a), (30a) correspondant, ladite au moins première batterie (B1) et le secteur ou les secteurs auxquels elle fournit étant susceptible d'être alimentés, à leur tour, à partir de la deuxième batterie (B2) au moyen d'un convertisseur CC/CC, ladite deuxième batterie (B2) étant connectée à un générateur de tension, **caractérisé en ce qu'**il est appliqué à la détection de courts-circuits entre lesdits premier et deuxième niveaux de tension, et **en ce qu'**il réalise une surveillance permanente de la tension dans les bornes de ladite première batterie (B1), le courant et le sens du courant dans ladite première batterie (B1), ainsi que l'état opérationnel du convertisseur CC/CC, en incluant une interruption du procédé de conversion dudit convertisseur CC/CC, qui met en rapport lesdites deux batteries (B1, B2), et **en ce que**, en cas de détecter que ledit état du convertisseur CC/CC est un état éteint, et qu'après cette détection d'état la valeur de ladite tension surveillé dépasse un certain seuil, et ensuite, ledit courant surveillé présente un sens d'entrée dans la première batterie (B1) et une valeur qui dépasse un certain seul, on informe au moyen d'un réseau N de communication chacun des microcontrôleurs (10a), (20a), (30a) desdites unités (10), (20), (30) de distribution de puissance, de manière à mettre en oeuvre un procédé de protection contre des courts-circuits.

12. Procédé selon la revendication 11, **caractérisé en ce que**, pendant l'étape de détection de courts-circuits, est réalisée de manière ordonnée et séquentielle la détection d'un état d'interruption du procédé de conversion du convertisseur CC/CC, l'acquisition de la tension dans les bornes de la batterie B1, à un niveau de tension inférieur, et finalement la détection d'un possible courant de charge de ladite batterie B1, de manière que si les valeurs prédéterminées se trouvent dans les intervalles prédéterminées, on procède à informer les unités (10, 20, 30) de distribution de puissance sur une possible situation de court-circuit, en envoyant une interruption prioritaire à travers ledit réseau N aux microcontrôleurs (10a, 20a, 30a) de celles-ci.

13. Procédé selon la revendication 11, **caractérisé en ce que** ledit procédé de protection contre des courts-circuits comprend une déconnexion complète de toutes les charges (23, 33) de puissance associées à chacune des unités (20), (30), de distribution de puissance, et **en ce que**, en cas où l'on continue à détecter une situation de court-circuit à partir dudit module de surveillance, on envoie un signal à travers le réseau N de communications pour la déconnexion d'au moins la batterie B2 de niveau de tension supérieure, en accédant pour cela au dispositif SDB de déconnexion de ladite batterie B2 ou à un noeud CN de contrôle associé à ladite batterie B2.

14. Procédé selon la revendication 1, **caractérisé en ce que** dans le cas où ladite déconnexion complète de charges (23, 33) mène à une situation sans courts-circuits, évaluée par ledit module de surveillance, on réalise un réconnexion des charges (23), (33) de puissance de chaque unité (20,30) de distribution de puissance jusqu'à la détection de la ou les charges susceptibles de générer ladite situation de court-circuit, évaluée par ledit module de surveillance.

15. Procédé selon la revendication 14, **caractérisé en ce que**, avant la mise en oeuvre de la réconnexion de chacune desdites charges (23), (33) de puissance, on réalise un mesurage de la tension ou impédance à la sortie d'un interrupteur (23a), (33a) de puissance appliqué pour contrôler une charge (23), (33) correspondante, et **en ce que**, dans le cas où la valeur mesurée dépasse un certain seuil, la charge impliquée est laissée inactive.

16. Procédé selon la revendication 11, **caractérisé en ce que** ledit procédé de protection contre des courts-circuits comprend la déconnexion progressive de toutes les charges (23), (33) de puissance associées à chacune des unités (20), (30) de distribution de puissance, et la vérification, à partir dudit module de surveillance, de si une déconnexion déterminée fait que la situation de court-circuit s'arrête, dans lequel cas, on met en oeuvre une déconnexion permanente de la charge impliquée, et **en ce que**, dans le cas où la situation de court-circuit continue à être détectée à partir dudit module de surveillance après la déconnexion de toutes les charges (23), (33) de puissance de chaque unité (20), (30) de distribution de puissance, on envoie un signal pour la déconnexion d'au moins la batterie B2 de niveau de tension supérieure à travers ledit réseau N de communication, en accédant pour cela au dispositif SDB de déconnexion de ladite batterie B2 ou à un noeud CN de contrôle de celui-ci associé à ladite batterie B2.

17. Procédé selon la revendication 11, **caractérisé en ce que** ledit procédé de protection contre des courts-circuits comprend la supervision de la demande de courant dans des dispositifs de contrôle, tels que des interrupteurs (23a), (33a) de puissance, associés à chacune des charges (23), (33) de puissance qui dépendent de chacune des unités (20), (30) de distribution de puissance, et la déconnexion des charges dans lesquelles ladite demande dépasse un certain seuil, et **en ce que**, dans le cas où une situation de court-circuit continue à être détectée à partir dudit module de surveillance, après la supervision de toutes les charges (23), (33) de puissance de chaque unité (20), (30) de distribution de puissance, on envoie un signal pour déconnecter au moins la batterie B2 de niveau de tension supérieure à travers ledit réseau N de communications, en accédant pour cela au dispositif SDB de déconnexion de ladite batterie B2 ou à un noeud CN de contrôle de celui-ci associé à ladite batterie.

18. Procédé selon la revendication 11, **caractérisé en ce que** lesdits unités (20), (30) de distribution de puissance comprennent des dispositifs tels que des interrupteurs (23a), (33a) de puissance, avec détection de courant, associés à chacune des charges (23), (33) de puissance, interrupteurs (23a), (33a) de puissance qui sont contrôlés à partir du microcontrôleur (20a), (30a) correspondant de l'unité, et **en ce qu'**il comprend une étape de détection de l'état de sortie de chacun desdits interrupteurs (23a), (33a), précisément leurs tensions ou impédances, de manière que si la valeur détectée dans un interrupteur (23a), (33a) de puissance déterminé dépasse un certain seuil, on ne met pas en oeuvre la connexion de la charge (23), (33) associée à celui-ci.

19. Procédé selon la revendication 11, **caractérisé en ce que** dans le cas où le module de surveillance continue à détecter une situation de court-circuit à la fin dudit procédé de protection contre des courts-circuits de la part de chacune desdites unités (10, 20, 30) de distribution de puissance, on met en oeuvre la déconnexion des deux batteries B1 et B2 de leurs secteurs de réseau correspondants.
